# FASCICULE DE BREVET EUROPEEN

(11) **EP 2 450 242 B1**
(45) Date de publication et mention de la délivrance du brevet: **17.09.2014**
(21) Numéro de dépôt: 10190287.2
(22) Date de dépôt: 05.11.2010
(51) Int. Cl.: B60R 25/00, G06K 7/00, H04B 1/38, G07C 9/00

(54) **Identifiant d'accès et/ou de démarrage de véhicule automobile à support de données amovible**
Zugangs- und/oder Anlassidentifizierung für Kraftfahrzeug über Wechseldatenträger
Automobile access and/or starting identifier with removable data medium

(43) Date de publication de la demande: 09.05.2012
(73) Titulaire: VALEO Sicherheitssysteme GmbH, 85253 Erdweg (DE)
(72) Inventeur: Winter, Andreas, 81827, München (DE)
(74) Mandataire: Jacquot, Ludovic R. G.

(56) Documents cités:
- EP-A2- 1 030 260
- US-A1- 2006 219 776

## Description

L'invention concerne les identifiants sans contact pour l'accès et/ou le démarrage d'un véhicule automobile, qu'ils soient utilisables sous forme de télécommande actionnée par un utilisateur ou sous forme de badge agencé pour répondre à une interrogation d'authentification lancée par une unité de contrôle du véhicule automobile.

US 2006/0219776 A1 divulgue un identifiant selon la préambule de la revendication 1.

De tels identifiants sont de plus en plus utilisés pour héberger d'autres fonctions de stockage de données ou de support de droits à divers services.

Ainsi on a proposé des identifiants munis d'un réceptacle pour recevoir une carte mémoire de type Mass Memory et y charger ou y lire des données relatives à la maintenance du véhicule. On a également proposé des identifiants munis de fonctions de paiement notamment par communication de type NFC (near field communication).

On vise ici à proposer un identifiant de véhicule automobile muni d'un support de données amovible lequel soit avantageux en termes d'association du support avec l'identifiant et de retrait du support de l'identifiant.

Un tel identifiant selon l'invention est un identifiant tel que défini à la revendication 1.

D'autres caractéristiques, buts et avantages, apparaîtront à la lecture de la description qui va suivre, faite en référence aux figures annexées sur lesquelles :
- la figure 1 est en vue de dessous et en perspective d'un identifiant selon un mode de réalisation préféré de l'invention
- la figure 2 est une vue agrandie d'une cavité de réception de volet de ce même identifiant
- la figure 3 représente un volet destiné à être reçu dans la cavité de la figure 2
- la figure 4 représente le volet dans une position intermédiaire basculée dans le sens d'une désolidarisation du volet.
- La figure 4a représente le volet dans une position intermédiaire en saillie par rapport au reste de l'identifiant.
- la figure 5 représente le volet dans une position intermédiaire basculée et coulissée dans le sens d'une désolidarisation du volet
- la figure 6 représente le volet dans une position finale de sortie du support hors de la trappe.

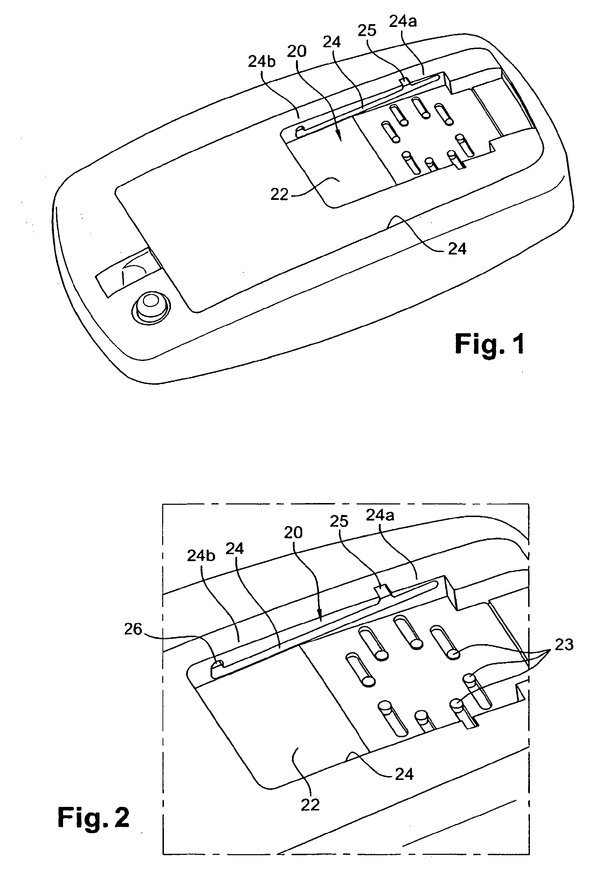

L' identifiant représenté à la figure 1 se présente sous la forme d'une parallélépipède dont deux faces principales et sensiblement parallèles portent respectivement un jeu de boutons de commande 10 pour la face supérieure , et une cavité de réception 20 pour la face inférieure. Nous nous intéresserons plus spécifiquement à la trappe de réception 20 dont le rôle est de recevoir et de maintenir un volet 30 qui sera décrit ci-après.

La cavité 20 présente une forme sensiblement rectangulaire.

Elle est constituée d'une bordure réalisée par réservation de même forme rectangulaire ménagée dans une paroi constitutive de la face inférieure de l'identifiant.

La cavité 20 présente en outre un fond 22 matérialisé par une cloison interne en matière plastique. Le fond 22 est traversé par un jeu de plots conducteurs 23 lesquels sont destinés à venir en appui contre des contacts correspondants ménagés sur un support de données 40 et qui sera décrit par la suite.

La bordure de la cavité 20 présente deux bords longitudinaux disposés en vis-à-vis l'un de l'autre. Chacun de ces bords longitudinaux est muni d'une glissière 24 s'étendant sur la majorité de la longueur du bord longitudinal. La glissière 24 est plus spécifiquement constituée d'un rail en creux dans une face latérale interne du bord considéré. Elle s'étend de manière légèrement oblique en formant une zone d'extrémité haute 24a, arrasante à la surface inférieure de l'identifiant, et une zone d'extrémité basse 23b, enfoncée vers l'intérieur de la cavité 20.

En zone arrasante 24a, la glissière 24 présente un canal transversal 25 ouvert en face inférieure de l'identifiant et permettant d'introduire dans la glissière 24 un pion latéral du volet 30 tel qu'il sera décrit ci-après.

En zone d'extrémité basse 24b, la glissière 24 présente un coude 26 donnant naissance à court segment dirigé vers la face inférieure lequel forme un logement borgne pour un pion latéral du volet qui sera décrit ci-après.

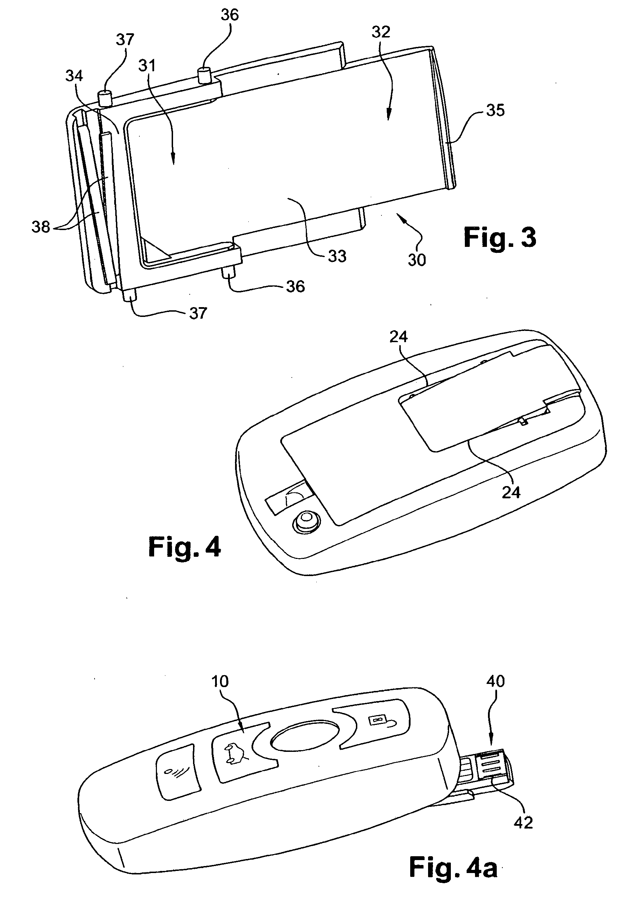

Tel qu'illustré sur la figure 3, le volet 30 se présente sous la forme d'une paroi parallélépipédique de forme complémentaire à celle du contour de la cavité 20.

Le volet 30 présente plus particulièrement un corps principal 31 et une extension distale 32 de largeur amoindrie. Les dimensions latérales de l'extension distale 32 sont choisies de telle sorte que cette extension distale présente la largeur d'un connecteur de type USB (Universal Serial Bus).

Le volet 30 reçoit en face interne un support de données 40 lequel, aux fins de stocker les données, porte ici une puce sécurisée de type carte à puce, répondant préférentiellement à la norme ISO 7816, munie d'un groupe de plots normalisés affleurant sur une face de ce support 40 destinée à venir au contact des plots de communication 23 précédemment décrits.

Le support de données présente en outre une extrémité distale 42 de largeur égale à celle d'un connecteur USB et portant une série de pistes de contact au format USB.

Le support de données 40 est placé de manière à recouvrir la face interne du volet 30, la partie du support de données 40 qui est équipée de la puce venant recouvrir le corps principal du capot 30, et le connecteur USB 42 recouvrant l'extension distale 32 du volet 30.

Le support de données 40, lorsqu'il est placé dans la cavité 20, présente sa puce sécurisée au contact des plots de communication 23 de telle sorte que la puce communique alors avec un lecteur d'une telle carte disposé dans l'identifiant. Un tel lecteur est ici associé à un modulateur/démodulateur et à une antenne NFC de telle sorte que le lecteur module et envoie des données sur l'antenne NFC à partir de données lues dans la puce, et démodule des données captées par l'antenne NFC pour les envoyer à la puce.

Le connecteur USB est quant à lui destiné à être utilisé lorsque le support de données 40 est désolidarisé de l'identifiant, afin de connecter le support de données 40 sur un ordinateur personnel et de lire et/ou écrire des données dans le support de données à l'aide de cet ordinateur.

Le support de données 40 peut ainsi être utilisé pour lire depuis un ordinateur personnel des données collectées dans le support de données notamment par échange via l'antenne NFC avec une antenne correspondante du véhicule. L'antenne NFC de la identifiant, est, en variante, une antenne selon tout autre protocole sans contact et typiquement un protocole à basses fréquences pour une portée électromagnétique réduite.

Les données ainsi collectées sont par exemple des données relatives à la maintenance du véhicule, telles que kilométrage effectué depuis la dernière visite d'entretien, l'état de différents constituants du véhicule, le modèle de motorisation, etc...

Le connecteur USB peut également être utilisé pour un dialogue en réseau entre le support de données 40 et un serveur à distance, tel que le serveur d'un constructeur automobile, afin d'effectuer une souscription de l'utilisateur auprès du constructeur pour l'activation de différents services. De tels services sont par exemple la possibilité de payer avec le support de données via l'antenne de communication sans contact de l'identifiant, ou encore la possibilité de générer des points de fidélité auprès d'un prestataire de services contractuellement lié au constructeur, ou encore la possibilité de recharger des droits à service stockés dans le support ou à distance après paiement préalable de ces droits sur le serveur distant.

Afin de recevoir et de maintenir en place le support de données 40, le capot 30 présente sur sa face interne une empreinte 33 dont les dimensions sont les mêmes que celles du support de données 40. L'empreinte 33 est délimitée à une extrémité par une surépaisseur 34 en forme de U servant de butée pour le support de données 40 lors de sa mise en place contre le volet 30. L'empreinte 33 est délimitée à l'autre extrémité par une marche de retenue 35 venant pousser le support de données 40 vers la surépaisseur 34 lorsque le support 40 est plaqué contre la face interne du volet 30.

Ainsi associés l'un contre l'autre, le volet 30 et le support de données 40 peuvent être introduits, maintenus, ainsi qu'extraits de la cavité 10 par coopération de pions latéraux équipant le volet 30 avec le couple de glissières 24 précédemment décrit.

Le volet 30 est pour cela muni de pions latéraux dont un premier couple de pions 36 est disposé à proximité du centre longitudinal du volet et un deuxième couple 37 est disposé à proximité d'une extrémité du volet destinée à être introduite la première dans la cavité 10.

Lorsque le volet 30 est en place dans la cavité 10, les deux couples de pions 36 et 37 sont tous deux positionnés dans les glissières latérales 24 de telle sorte que le volet 30 se trouve en affleurement de la face inférieure de l'identifiant. Dans cette position, le premier couple de pions 36 se trouve sensiblement à mi-chemin de l'étendue d'ensemble de la glissière 24. Le second couple de pions 37 se trouve quant à lui dans le coude 26 disposé à l'extrémité interne de chaque glissière 24.

Le second couple de pions 37 maintient le capot 40 contre un coulissement longitudinal le long des glissières 23.

Deux lames de ressort 38 sont ménagées à proximité des pions 37 pour venir s'interposer entre le capot 30 et la cavité 20 et rappeler ainsi le capot en affleurement de la surface inférieur de l'identifiant, et de la sorte maintenir les pions 37 dans le segment borgne du coude 26.

Le support de données 40 est positionné de telle sorte que les contacts de surface du support se trouvent du côté opposé à celui des ressorts 38 par rapport à un axe géométrique matérialisé par les premiers pions 36. L'effort d'écartement exercé par les ressorts 38 entre le volet 30 et la cavité 20 se traduit donc par un effort d'appui des contacts de surface du support contre les plots de communication 23. Il en résulte un maintien une sécurisation ferme de la connexion entre le support de données et l'identifiant.

L'effort exercé par les ressorts 38 produit en outre une mise en contact permanente entre le volet 30 et la bordure de la cavité 20, permettant ainsi une étanchéité adéquate entre le volet 30 et le contour de la cavité 20.

Un coulissement longitudinal du capot 30 n'est autorisé qu'après avoir extrait le couple de pions 37 de ce coude 26. Une telle extraction est autorisée par un mouvement de basculement du volet autour d'un axe de rotation sensiblement central au volet 30, lequel axe de rotation est matérialisé par le premier couple de pions 36 s'appuyant dans les glissières 24.

Un utilisateur effectue un tel basculement par simple pression sur l'extrémité du volet 30 qui porte le couple de pions 37. Le volet 30 se trouve alors dans une position oblique représentée à la figure 4 où les pions d'extrémité 37 rejoignent alors le tronçon courant de chaque glissière 24. De par cette position oblique, il est aisé à l'utilisateur d'imprimer une poussée sur le volet 30 en direction de l'extrémité de la glissière où le volet est maintenant écarté de la face inférieure de l'identifiant.

Une telle poussée permet de venir placer le couple de premiers pions 36 en butée à l'extrémité la plus externe 24a des glissières 24. Cette extrémité 24a est placée de manière suffisamment proche d'un bord longitudinal de l'identifiant pour que le volet 30 et le support de données 40 se trouvent en saillie hors de l'identifiant. Cette poussée permet plus précisément de dégager la partie du support amovible 40 constituée par le connecteur USB et de dégager concomitamment la partie extrémale 32 du volet 30 qui est conformée en largeur au support amovible.

Le dégagement en coulissement du volet et du support de données est alors suffisant pour permettre à un utilisateur d'introduire le connecteur USB 42 du support amovible 40 dans un connecteur USB femelle d'un ordinateur portable sans avoir à séparer le support amovible 40 de l'identifiant.

A cet effet, l'épaisseur du volet 30 dans sa partie recouvrant le connecteur USB 42 du support amovible 40 est choisie pour que l'ensemble constitué du volet 30 et du support de données 40 ainsi associé réponde à la norme USB en termes de dimensions de connecteur mâle.

On comprend alors que le présent identifiant permet facilement de mettre en oeuvre le support de données 40 dans un ordinateur personnel ou tout autre lecteur distinct, sans avoir à séparer le support amovible 40 du reste de l'identifiant. Un simple basculement suivi d'un coulissement du volet permet de rendre le support de données enfichable avec le corps de l'identifiant sur une tel lecteur distinct.

Selon un autre mode d'utilisation d'une telle poussée en coulissement du volet 30 l'utilisateur coulisse le premier couple de pions 36 comme le second couple de pions 37 dans les glissières 24, et arrête ce coulissement lorsque le premier couple de pions 36 se trouve en regard du canal transversal 25 de chaque glissière 24. L'utilisateur n'a alors qu'à appliquer un léger effort d'écartement du volet hors de la cavité 20 pour que les pions 36 sortent librement des glissières 24 et que le volet 30 effectue de ce fait une rotation autour du second couple de pions 37 en direction d'un écartement plus prononcé du volet 30.

A ce stade, le volet 30 est suffisamment écarté du reste de l'identifiant pour que le support de données 40 puisse être séparé du volet 30 et extrait de l'identifiant. Une fois le support de données 40 ainsi extrait, le volet 30 peut alors être replacé dans sa position initiale dans la cavité en lui faisant effectuer les mouvements inverses à ceux décrits précédemment.

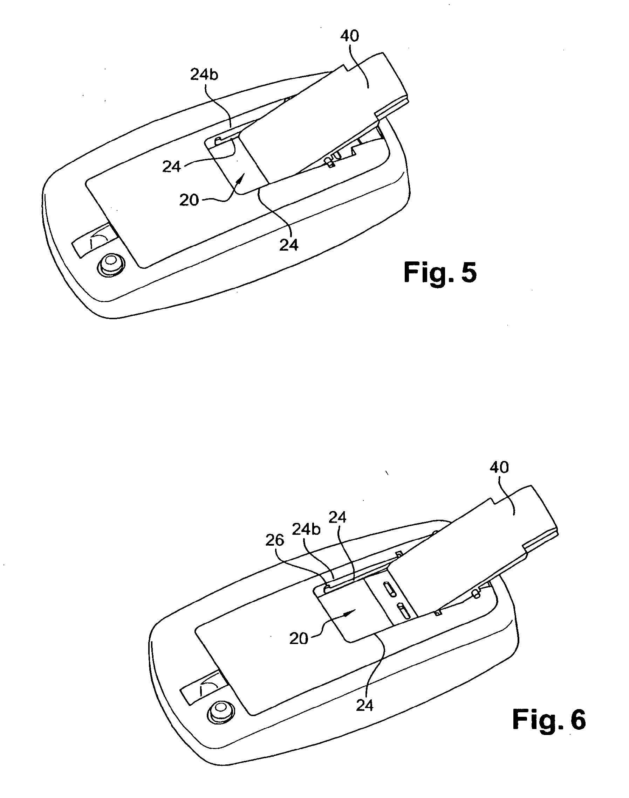

Dans une dernière étape représentée sur la figure 6, l'utilisateur vient coulisser les pions d'extrémité 37 devant les canaux transversaux 25 des glissières 24 et extrait les pions 37 des glissières 24 pour libérer ainsi totalement le volet 30 du reste de l'identifiant. Ainsi séparé du corps principal de l'identifiant, le volet 30 peut être facilement manipulé pour en extraire le support de données 40 notamment lorsque le support de données est solidement maintenu par le volet.

Les canaux transversaux 25 sont toutefois préférentiellement choisis avec une largeur suffisamment faible pour qu'une telle séparation du volet 30 nécessite une effort important de l'utilisateur, rendant peu probable une séparation accidentelle du volet 30 par rapport au reste de l'identifiant. Ainsi un coulissement complet du volet 30 tel que décrit précédemment donne lieu à un franchissement des canaux transversaux 25 par le premier couple de pions 36 sans risque que ces pions 36ne traversent ces canaux transversaux 25.

Le canaux transversaux 25 sont alors utilisés essentiellement lors d'un montage initial du volet 30 sur le reste de l'identifiant, par insertion d'abord du second couple de pions 37 dans les glissières 23, puis du premier couple de pions 36 suivi d'un coulissement du volet 30 jusqu'à sa position d'obturation.

Dans un mode de réalisation alternatif, le couple de deuxièmes pions 37, lequel vient engager le coude 26 en position d'obturation du volet, peut être remplacé par une autre type de verrouillage dans cette position d'obturation, tel qu'un couple d'ergots portés par le volet 30 et venant s'engager dans un couple de cavités correspondantes en bordure de la cavité 20. Dans encore un autre mode de réalisation, les premiers pions 36 peuvent eux-mêmes servir au verrouillage du volet 30 en position d'obturation par coopération avec des bossages de retenue disposés dans les glissières 24 par exemple.

Dans encore un autre mode de réalisation alternatif, le couple de premiers pions est disposé en bordure de la cavité et le volet est muni de deux glissières disposées sur deux bords opposés, de sorte que les pions portés par la cavité sont disposés dans les glissières du volet. Le volet peut alors pivoter autour d'un axe matérialisé par les deux pions portés par la cavité, et coulisser par circulation des deux pions de la cavité à l'intérieur des glissières du volet.

Bien qu'on ait décrit un volet apte à être associé à un support amovible avant d'être placé en obturation de la cavité de réception, dans une variante le volet et le support de données sont solidarisés l'un à l'autre de manière inséparable. Dans encore un autre mode de réalisation, c'est le support amovible lui-même qui constitue le volet d'obturation de la cavité, par exemple par le biais d'un aménagement simple consistant à disposer un module de mémoire, par exemple la puce précédemment décrite dans la matière plastique même du volet, éventuellement couplée à un connecteur USB lui-même constitué par le volet lui même, ou encore par adjonction d'un ou plusieurs couples de pions sur le support de données tel que décrit précédemment, et qui alors remplit à la fois les fonctions de support de données et de volet d'obturation.

## Revendications

1. Identifiant d'accès et/ou de démarrage de véhicule automobile agencé pour permettre un accès et/ou un démarrage au/du véhicule sans contact avec le véhicule, l'identifiant comportant une cavité (20) obturée par un volet (30), ledit volet (30) étant apte à recevoir un support de données (40), **caractérisé en ce que** le volet (30) et la cavité (20) sont munis d'un couple de glissières (24) et d'au moins un couple de pions (36, 37) engagés dans ce couple de glissières (24) de telle sorte que le volet (30) est déplaçable en rotation et en coulissement, respectivement par rotation autour d'un axe matérialisé par ces deux pions (36) et par coulissement des deux pions (36) dans les deux glissières (24),

2. Identifiant selon la revendication 1, **caractérisé en ce que** le couple de pions (36) appartient au volet (30) et le couple de glissières (24) appartient à la cavité (20).

3. Identifiant selon la revendication 2, **caractérisé en ce que** les glissières (24) s'étendent selon une profondeur progressive à l'intérieur de la cavité (20).

4. Identifiant selon la revendication 3, **caractérisé en ce que** le volet (30) comporte un couple de pions additionnel (37) lequel est engagé dans les glissières (24), les glissières (24) étant munies à l'une de leurs extrémités d'un couple de coudes (26) de réception du couple de pions additionnel (37) dans un position du volet (30) dans laquelle le volet (30) obture la cavité (20).

5. Identifiant selon l'une quelconque des revendications 2 à 4, **caractérisé en ce que** les glissières (24) comportent chacune un canal transversal (25) débouchant sur une face de l'Identifiant de sorte que le volet (30) peut être séparé du reste de l'identifiant par passage des pions (36, 37) portés par le volet (30) au travers des canaux transversaux (25).

6. Identifiant selon l'une quelconque des revendications précédentes, **caractérisé en ce que** le volet (30) comporte une face interne munie d'une empreinte (31) de réception d'un support de données amovible (40).

7. Identifiant selon l'une quelconque des revendications précédentes, **caractérisé en ce qu'**il comporte un support de données amovible (40) comprenant un puce sécurisée.

8. Identifiant selon l'une quelconque des revendications précédentes, **caractérisé en ce qu'**il comporte une support de données amovible (40) comprenant un connecteur USB (42).

9. identifiant selon les revendications 7 et 8 en combinaison, **caractérisé en ce qu'**il est muni d'un antenne de communication et d'un module de communication apte à lire et/ou écrire des données dans le support de données amovible (40) et à émettre et/ou recevoir ces données au travers de ladite antenne.

10. Identifiant selon l'une quelconque des revendications précédentes, **caractérisé en ce que** le volet (30) est constitué par un support de données amovible.

## Patentansprüche

1. Zugangs- und/oder Start-Identifikator eines Kraftfahrzeugs, der eingerichtet ist, um einen Zugang zum und/oder einen Start des Fahrzeugs ohne Kontakt mit dem Fahrzeug zu ermöglichen, wobei der Identifikator einen von einer Klappe (30) verschlossenen Hohlraum (20) aufweist, wobei die Klappe (30) einen Datenträger (40) aufnehmen kann, **dadurch gekennzeichnet, dass** die Klappe (30) und der Hohlraum (20) mit einem Paar von Gleitschienen (24) und mit mindestens einem Paar von Zapfen (36, 37) versehen sind, die in dieses Paar von Gleitschienen (24) eingeführt sind, so dass die Klappe (30) durch Drehen um eine von diesen zwei Zapfen (36) gebildete Achse bzw. durch Gleiten der zwei Zapfen (36) in den zwei Gleitschienen (24) in Dreh- und Gleitrichtung verschiebbar ist.

2. Identifikator nach Anspruch 1, **dadurch gekennzeichnet, dass** das Paar von Zapfen (36) zur Klappe (30) und das Paar von Gleitschienen (24) zum Hohlraum (20) gehört.

3. Identifikator nach Anspruch 2, **dadurch gekennzeichnet, dass** die Gleitschienen (24) sich gemäß einer zunehmenden Tiefe im Inneren des Hohlraums (20) erstrecken.

4. Identifikator nach Anspruch 3, **dadurch gekennzeichnet, dass** die Klappe (30) ein zusätzliches Paar von Zapfen (37) enthält, das in die Gleitschienen (24) eingeführt ist, wobei die Gleitschienen (24) an einem ihrer Enden mit einem Paar von Kniestücken (26) zur Aufnahme des zusätzlichen Paars von Zapfen (30) in einer Stellung der Klappe (30) versehen sind, in der die Klappe (37) den Hohlraum (20) verschließt.

5. Identifikator nach einem der Ansprüche 2 bis 4, **dadurch gekennzeichnet, dass** die Gleitschienen (24) je einen Querkanal (25) aufweisen, der an einer Seite des Identifikators mündet, so dass die Klappe (30) durch Durchgang der von der Klappe (30) getragenen Zapfen (36, 37) durch die Querkanäle (25) vom Rest des Identifikators getrennt werden kann.

6. Identifikator nach einem der vorhergehenden Ansprüche, **dadurch gekennzeichnet, dass** die Klappe (30) eine Innenseite aufweist, die mit einer Vertiefung (31) zur Aufnahme eines Wechseldatenträgers (40) versehen ist.

7. Identifikator nach einem der vorhergehenden Ansprüche, **dadurch gekennzeichnet, dass** er einen Wechseldatenträger (40) aufweist, der einen gesicherten Chip enthält.

8. Identifikator nach einem der vorhergehenden Ansprüche, **dadurch gekennzeichnet, dass** er einen Wechseldatenträger (40) aufweist, der einen USB-Verbinder (42) enthält.

9. Identifikator nach den Ansprüchen 7 und 8 in Kombination, **dadurch gekennzeichnet, dass** er mit einer Kommunikationsantenne und mit einem Kommunikationsmodul versehen ist, das Daten im Wechseldatenträger (40) lesen und/oder schreiben und diese Daten über die Antenne senden und/oder empfangen kann.

10. Identifikator nach einem der vorhergehenden Ansprüche, **dadurch gekennzeichnet, dass** die Klappe (30) aus einem Wechseldatenträger besteht.

## Claims

1. Motor vehicle access and/or starting identifier arranged to allow access to and/or starting up of the vehicle without contact with the vehicle, the identifier comprising a cavity (20) blocked by a flap (30), said flap (30) being suitable for receiving a data medium (40), **characterized in that** the flap (30) and the cavity (20) are provided with one pair of slideways (24) and at least one pair of pins (36, 37) engaged in this pair of slideways (24) such that the flap (30) can be displaced in rotation and by sliding, respectively by rotation about an axis embodied by these two pins (36) and by sliding of the two pins (36) in the two slideways (24).

2. Identifier according to Claim 1, **characterized in that** the pair of pins (36) belongs to the flap (30) and the pair of slideways (24) belongs to the cavity (20).

3. Identifier according to Claim 2, **characterized in that** the slideways (24) extend by a progressive depth inside the cavity (20).

4. Identifier according to Claim 3, **characterized in that** the flap (30) comprises an additional pair of pins (37) engaged in the slideways (24), the slideways (24) being provided at one of their ends with a pair of bends (26) for receiving the additional pair of pins (37) in a position of the flap (30) in which the flap (30) blocks the cavity (20).

5. Identifier according to any one of Claims 2 to 4, **characterized in that** the slideways (24) each comprise a transverse channel (25) emerging on a face of the identifier such that the flap (30) can be separated from the rest of the identifier by the pins (36, 37) borne by the flap (30) passing through the transverse channels (25).

6. Identifier according to any one of the preceding claims, **characterized in that** the flap (30) comprises an internal face provided with an imprint (31) for receiving a removable data medium (40).

7. Identifier according to any one of the preceding claims, **characterized in that** it comprises a removable data medium (40) comprising a secured chip.

8. Identifier according to any one of the preceding claims, **characterized in that** it comprises a removable data medium (40) comprising a USE connector (42).

9. Identifier according to Claims 7 and 8 in combination, **characterized in that** it is provided with a communication antenna and a communication module suitable for reading and/or writing data in the removable data medium (40) and for sending and/or receiving these data through said antenna.

10. Identifier according to any one of the preceding claims, **characterized in that** the flap (30) is formed by a removable data medium.
